# EUROPEAN PATENT APPLICATION

(11) **EP 2 450 775 A1**
(43) Date of publication of application: **09.05.2012**
(21) Application number: 10013828.8
(22) Date of filing: 20.10.2010
(51) Int. Cl.: G06F 3/033, G06F 1/16

(54) **Image orientation control in a handheld device**

(71) Applicant: Sony Ericsson Mobile Communications AB, 221 88 Lund (SE)
(72) Inventor: Söderström, Karl, 211 25 Malmö (SE); Håff, Olle, 221 88 Lund (SE)
(74) Representative: Banzer, Hans-Jörg

(57) **Abstract**

For selecting an orientation of an image (50) shown by a display (12) of a handheld device (10), an output signal of a touch sensitive sensor (20A, 20B, 20C, 20D) is received. The orientation of the image (50) is selected depending on the output signal of the touch sensitive sensors (20A, 20B, 20C, 20D). The image (50) is then shown on the display (12) with the selected orientation.

## Description

### FIELD OF THE INVENTION

The present application relates to methods for controlling an orientation of an image displayed in a handheld device and to corresponding handheld devices.

### BACKGROUND

In handheld devices such as mobile phones, media players or the like, a display may be provided for displaying information to a user of the handheld device. The display will typically show an image which may include graphics or texts. Typically the display will have a substantially rectangular shape with two short sides arranged opposite to each other and two long sides arranged opposite to each other.

The image as shown by the display of such handheld devices may be considered to have a top side, a bottom side, and two lateral sides, i.e., a left side and a right side. In some handheld devices, there is the possibility of showing the image either in a landscape orientation, in which the lateral sides are arranged on the short sides of the display, or in a portrait orientation, in which the lateral sides of the image are arranged on the long sides of the display. A user may manually select between these two orientations. Further, the orientation may also be automatically selected using an acceleration sensor provided in the handheld device. In such cases, the acceleration sensor is substantially used to detect the orientation of the handheld device with respect to the direction of the gravity force. That is to say, if it is found that the gravity force is directed along the short sides of the display, the landscape orientation may be selected, and if the gravity force is found to be along the long sides of the display, the portrait orientation is selected. However, when selecting the display orientation in the above-mentioned manner using an acceleration sensor, situations may occur in which the orientation of the image is not selected in the most appropriate way. For example, in situations in which the user is not standing or sitting while using the handheld device but rather taking some other position such as lying, the selection on the basis of the acceleration sensor may not be appropriate. Furthermore, if the user is moving while using the handheld device, this will typically also have effects on the output of the acceleration sensor. This may for example occur when using the handheld device in a car while driving through a curve. Again, the selection of the image orientation on the basis of the acceleration sensor may be not appropriate.

Accordingly, there is a need for techniques which allow for efficiently and reliably controlling the orientation of an image displayed in a handheld device.

### SUMMARY

According to an embodiment of the invention. A method of displaying an image in a handheld device is provided. According to the method, an output signal of a touch sensitive sensor located on one side of a display of the handheld device is received. An orientation of the image is selected depending on the received output signal of the at least one touch sensitive sensor. The image is shown with the selected orientation on the display of the handheld device.

According to an embodiment of the invention, the image has a top side, a bottom side, and lateral sides, and the orientation is selected to show the image with one of its lateral sides on the side of the at least one touch sensitive sensor if the output signal of the at least one touch sensitive sensor indicates contact with a user's hand.

According to an embodiment of the invention, the method may further include receiving an output signal of at least one further touch sensitive sensor located at at least one further side of the display. The orientation of the image may then be selected also depending on the received output signal of the at least one further touch sensitive sensor. In this embodiment, when assuming that the image has a top side, a bottom side, and lateral sides, the orientation may be selected to show the image with one of its lateral sides on that further side of the display on which the at least one further touch sensitive sensor indicates contact with a user's hand.

In some embodiments of the invention, the at least one touch sensitive sensor and the at least one further touch sensitive sensor are located on opposite sides of the display. In some embodiments, the at least one touch sensitive sensor and the at least one further touch sensitive sensor may also be located on perpendicular sides of the display. In some embodiments of the invention, the at least one touch sensitive sensor and the at least one further touch sensitive sensor may also be located on all sides of the display, i.e., at least one further touch sensitive sensor may be located on the side of the display which is opposite to the side of the at least one touch sensitive sensor, at least one further touch sensitive sensor may be located on one side of the display which is perpendicular to the side of the at least one touch sensitive sensor, and at least one further touch sensitive sensor may be located on the other side of the display which is perpendicular to the side of the at least one touch sensitive sensor.

According to an embodiment of the invention, the method further comprises receiving an output signal of at least one acceleration sensor of the handheld device. In this embodiment, the orientation may be selected also depending on the received output signal of the at least one acceleration sensor. In this embodiment, when assuming that the image has a top side and a bottom side, the orientation may be selected to show the image with its top side in a direction of acceleration indicated by the acceleration sensor.

According to an embodiment of the invention, a handheld device is provided. The handheld device comprises a display and at least one touch sensitive sensor located at one side of the display. In addition, the handheld device comprises an image orientation controller configured to control an orientation of an image shown by the display depending on an output signal of the at least one touch sensitive sensor.

According to an embodiment of the invention, the handheld device may further comprise at least one further touch sensitive sensor located at at least one further side of the display. In this embodiment, the image orientation controller may be configured to control the orientation of the image also depending on an output signal of the at least one further touch sensitive sensor.

According to an embodiment of the invention, the at least one touch sensitive sensor and/or the at least one further touch sensitive sensor comprises a capacitive sensor. According to other embodiments, the at least one touch sensitive sensor and/or the at least one further touch sensitive sensor may also comprise a resistive sensor. In some embodiments, capacitive sensors and resistive sensors may be combined.

According to an embodiment of the invention, the handheld device further comprises at least one acceleration sensor. In this embodiment, the image orientation controller may be configured to control the orientation of the image depending on an output signal of the at least one acceleration sensor.

According to an embodiment of the invention, the handheld device further comprises a housing having a front surface in which the display is mounted. In this embodiment, the at least one touch sensitive sensor and/or the at least one further touch sensitive sensor may be located on the front surface of the housing.

The handheld device according to the above-described embodiments may be configured to operate in accordance with a method according to the above-described embodiments.

In other embodiments, other methods or handheld devices may be provided. Also, it will be appreciated by those skilled in the art that features of the above-described embodiments may be combined with each other as appropriate and new embodiments may be formed by combining one or more features of the above-mentioned embodiments.

The foregoing and other features and advantages of embodiments of the invention will become further apparent from the following detailed description and the accompanying drawings.

### BRIEF DESCRIPTION OF THE DRAWINGS

Embodiments of the present invention are illustrated by the accompanying figures, in which:
Fig. 1 schematically illustrates a front view of a handheld device according to an embodiment of the invention;
Fig. 2 schematically illustrates components in a handheld device according to an embodiment of the invention;
Fig. 3 schematically illustrates a handheld device according to an embodiment of the invention as held by a user in a first orientation;
Fig. 4 schematically illustrates a handheld device according to an embodiment of the invention as held by a user in a further orientation;
Fig. 5 schematically illustrates a handheld device according to an embodiment of the invention as held by a user in a still further orientation;
Fig. 6 schematically illustrates a handheld device according to an embodiment of the invention as held by a user in a still further orientation; and
Fig. 7 shows a flow chart for schematically illustrating a method according to an embodiment of the invention.

### DETAILED DESCRIPTION

In the following, embodiments of the present invention will be described in more detail and with reference to the accompanying drawings. The described embodiments are intended to be merely exemplary and not to be construed as limiting the scope of the present invention. It should be noted that in the drawings the elements are not necessary to scale with each other but have been depicted in a manner which allows for conveying features of the illustrated embodiments to a person skilled in the art.

In the following detailed description, embodiments of the present invention are described which relate to a handheld device, which may be in the form of a mobile phone, a media player, or an electronic book reader. However, it is to be understood that the concepts as described hereinafter could also be applied to other types of mobile electronic devices equipped with a display. Examples of such handheld devices are personal digital assistants (PDAs), handheld video game consoles, or digital cameras. In this respect, it is to be understood that details of the electronic circuitry and components provided in the handheld device will depend on the type of application the handheld device is intended for.

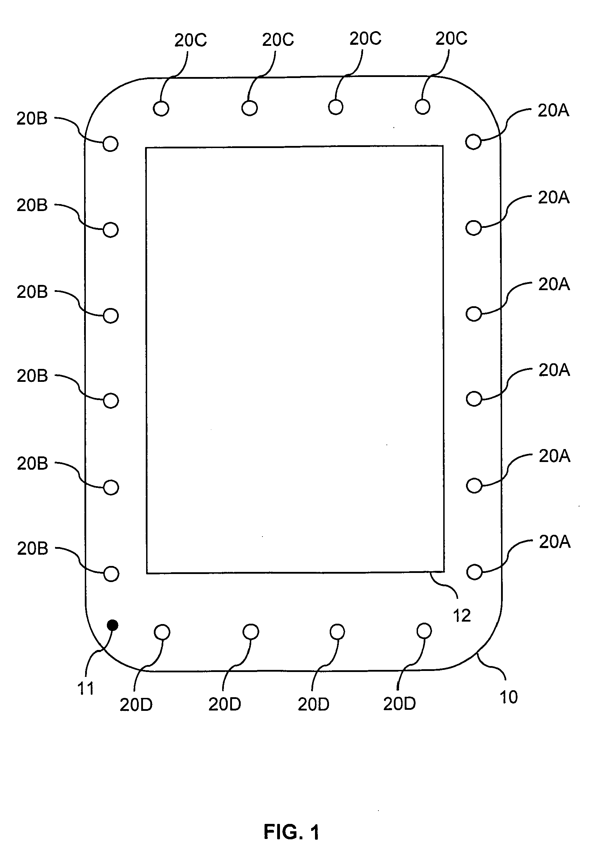

Fig. 1 shows a front view of a handheld device 10 according to an embodiment of the invention. As illustrated, the handheld device 10 is equipped with a display 12 mounted in a front surface of a housing 11 of the handheld device 10. In the illustrated example, the display 12 has a substantially rectangular format having two short sides arranged opposite to each other and two long sides arranged opposite to each other. The display 12 may for example be implemented using thin film transistor (TFT) technology or organic light emitting diode (OLED) technology. In the following, it will be assumed that the display 12 is a full graphical display which allows to display both text and graphics. The display 12 may be a multicolor display or a monochromatic display. The display 12 may further be configured as a touch-screen which allows a user of the handheld device 10 to control operation of the handheld device 10 using manipulations on the display 12. As an alternative or in addition, the handheld device 10 may also be provided with mechanical buttons (not illustrated) for allowing a user to control operation of the handheld device 10.

As further illustrated, the handheld device 10 is equipped with a number of touch sensitive sensors 20A, 20B, 20C, 20D. In particular, a first group of touch sensitive sensors 20A is arranged on a first side of the display 12. The first side of the display 12 is one of the long sides of the display 12. A second group of touch sensitive sensors 20B is arranged on a second side of the display 12. The second side of the display 12 is arranged opposite to the first side of the display 12 and is the other long side of the display 12. A third group of touch sensitive sensors 20C is provided on a third side of the display 12. The third side of the display 12 is one of the short sides of the display 12 and extends perpendicular to the long sides of the display 12. A fourth group of touch sensitive sensors 20D is provided on a fourth side of the display 12. The fourth side of the display 12 is opposite to the third side of the display 12 and is the other short side of the display 12. The fourth side of the display 12 extends perpendicular to the long sides of the display 12.

In the illustrated example, the first group of touch sensitive sensors 20A and the second group of touch sensitive sensors 20B each comprise six touch sensitive sensors, while the third group of touch sensitive sensors 20C and the fourth group of touch sensitive sensors 20D each comprise four touch sensitive sensors. However, it is to be understood that these numbers of touch sensitive sensors in each group are merely exemplary and can be selected as appropriate, e.g., depending on the detailed dimensions and configuration of the handheld device 10. In some embodiments, only one touch sensitive sensor on each side of the display 12 may be sufficient. Further, in some embodiments only one group of touch sensitive sensors may be provided on one side of the display, e.g., only the group of touch sensitive sensors 20A, only the group of touch sensitive sensors 20B, only the group of touch sensitive sensors 20C, or only the group of touch sensitive sensors 20D.

Also, in some embodiments the handheld device 10 may be provided with suitable combinations of two groups of touch sensitive sensors on different sides of the display 12. For example, the handheld device 10 could be provided with only the first group of touch sensitive sensors 20A and the second group of touch sensitive sensors 20B, which are located on opposite long sides of the display 12. Similarly, the handheld device 10 could also be provided with only the third group of touch sensitive sensors 20C and the fourth group of touch sensitive sensors 20D, which are located on opposite short sides of the display 12. Moreover, the handheld device 10 could also be provided with only the first group of touch sensitive sensors 20A and the third group of touch sensitive sensors 20C, which are located on perpendicular sides of the display 12. Further, the handheld device 10 could also be provided with only the first group of touch sensitive sensors 20A and the fourth group of touch sensitive sensors 20D, which are located on perpendicular sides of the display. Further, the handheld device 10 could also be provided with only the second group of touch sensitive sensors 20B and the third group of touch sensitive sensors 20C, which are located on perpendicular sides of the display. Further, the handheld device 10 could also be provided with only the second group of touch sensitive sensors 20B and the fourth group of touch sensitive sensors 20D, which are located on perpendicular sides of the display. In some embodiments, the handheld device 10 could also be provided with a group of the touch sensitive sensors on one side of the display, and further groups of touch sensitive sensors on two perpendicular sides of the display. That is to say, in some embodiments either one of the first group of touch sensitive sensors 20A, the second group of touch sensitive sensors 20B, the third group of touch sensitive sensors 20C, or the fourth group of touch sensitive sensors 20D could be omitted from the illustrated arrangement.

In the illustrated embodiment, the touch sensitive sensors 20A, 20B, 20C, 20D are located on the front surface of the housing 11. Accordingly, the touch sensitive sensors 20A, 20B, 20C, 20D face into the same direction as the display 12. In this way, the touch sensitive sensors 20A, 20B, 20C, 20D are arranged to efficiently detect on which side of the handheld device 10 the user's hands are located while holding the handheld device 10. In other embodiments, other positions of the touch sensitive sensors 20A, 20B, 20C, 20D may be selected, e.g., on side surfaces of the handheld device 10 and/or on a rear surface of the handheld device 10.

As further illustrated, the individual touch sensitive sensors 20A, 20B, 20C, 20D of each group are arranged to be spaced part at substantially equal distances. However, in other embodiments other arrangements may be used as well, e.g. using irregular spacings or spacings specifically adapted to known ways of holding the handheld device. Also, in some embodiments the touch sensitive sensors 20A, 20B, 20C, 20D may be provided with other shapes than illustrated in Fig. 1. For example, the touch sensitive sensors 20A, 20B, 20C, 20D could be provided with an elongated shape. According to some embodiments, two or more of the touch sensitive sensors 20A, 20B, 20C, 20D in a group could be replaced by a single touch sensitive sensor having elongated shape and extending substantially in parallel to the side of the display 12 on which the touch sensitive sensor is located.

According to some embodiments of the invention, the touch sensitive sensors 20A, 20B, 20C, 20D are used to detect on which side of the display 12 the user is holding the display. From this information, it can be deduced which orientation should be used for displaying an image on the display 12. For example, if one or more of the touch sensitive sensors 20A of the first group indicate contact with the user's hand, this may indicate that the user is holding the handheld device 10 on the side of the touch sensitive sensors 20A, which means that typically an orientation of the image on the display 12 will be appropriate in which a lateral side of the image is arranged on the side of the touch sensitive sensors 20A. Similarly, if one or more of the touch sensitive sensors 20C indicate contact with the user's hand, this may indicate that the user is holding the handheld device 10 on the side of the touch sensitive sensors 20C, which means that an image orientation in which one of the lateral sides of the image is arranged on the side of the touch sensitive sensors 20C is appropriate. Similar considerations apply with respect to the touch sensitive sensors 20B of the second group and the touch sensitive sensors 20D of the fourth group.

Furthermore, when one or more of the touch sensitive sensors 20A indicates contact with the user's hand, and also one or more of the touch sensitive sensors 20B indicates contact with the user's hand, this may indicate that the user is holding the handheld device 10 with one hand on the side of the touch sensitive sensors 20A and the other hand of the side of the touch sensitive sensors 20B, which means that an image orientation with the lateral sides arranged on the side of the touch sensitive sensors 20A and the side of the touch sensitive sensors 20B is appropriate. Similarly, when one or more of the touch sensitive sensors 20C of the third group indicates contact with the user's hand and one or more of the touch sensitive sensors 20D of the fourth group indicates contact with the user's hand, this may indicate that the user is holding the handheld device 10 with one hand on the side of the touch sensitive sensors 20C and the other hand on the side of the touch sensitive sensors 20D, which means that an image orientation with the lateral sides of the image are arranged on the side of the touch sensitive sensors 20C and the side of the touch sensitive sensors 20D is appropriate.

According to an embodiment of the invention, the touch sensitive sensors 20A, 20B, 20C, 20D may be capacitive sensors. The use of capacitive sensors allows for reliably detecting even slight contact of the user's hand with the touch sensitive sensor. In other embodiments, other types of touch sensitive sensors may be used, e.g., resistive touch sensitive sensors or optical touch sensitive sensors. In each case, it is advantageous if the touch sensitive sensors do not require that significant force is exerted onto the touch sensitive sensor in order to detect contact with the user's hand. In some embodiments, also combinations of different types of touch sensitive sensors may be used in the handheld device.

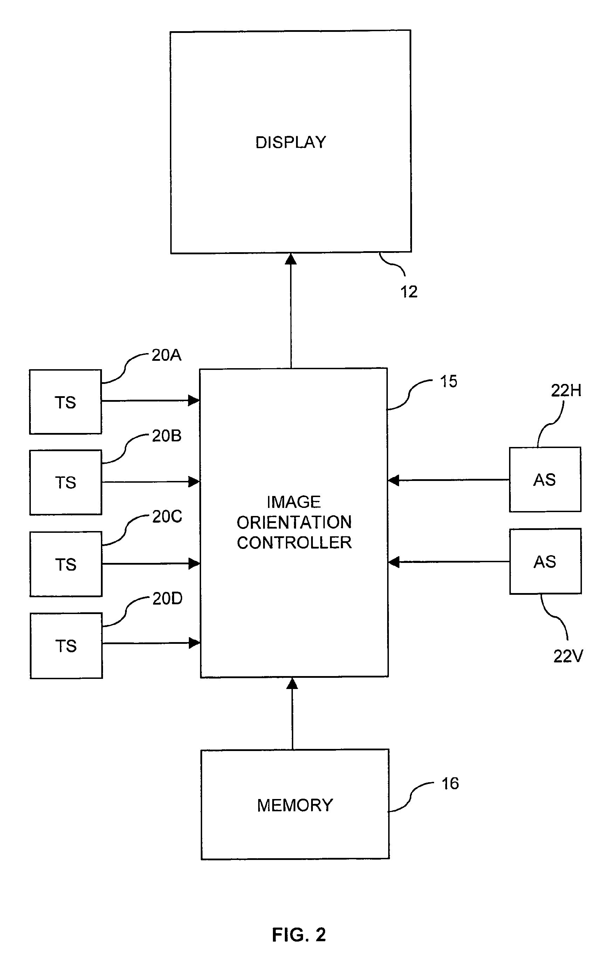

Fig. 2 schematically illustrates components of the handheld device 10, which are used for implementing concepts of selecting the orientation of the image on the display 12 according to embodiments of the invention. In particular, Fig. 2 illustrates the display 12, an image orientation controller 15, and the touch sensitive sensors (TS) 20A, 20B, 20C, 20D. Further, Fig. 2 illustrates a memory 16 and acceleration sensors (AS) 22H, 22V.

The image orientation controller 15 is used to implement control of the orientation of the image as shown by the display 12. For this purpose, the image orientation controller 15 may receive image data from the memory 16 and supplies an image signal to the display 12. Moreover, the image orientation controller 15 receives output signals of the touch sensitive sensors 20A, 20B, 20C, 20D. According to some embodiments, the image orientation controller 15 further receives output signals of the acceleration sensors 22H, 22V.

The respective output signals of the touch sensitive sensors 20A, 20B, 20C, 20D indicate whether there is contact with the user's hand. Accordingly, by evaluating the output signals of the touch sensitive sensors 20A, 20B, 20C, 20D, the image orientation controller 15 can conclude on which side of the display 12 the user is holding the handheld device 10. This can be done by comparing or otherwise correlating the respective output signals of the touch sensitive sensors 20A, 20B, 20C, 20D to each other. For this purpose, the output signals of the touch sensitive sensors 20A, 20B, 20C, 20D may be evaluated groupwise. According to some embodiments, it also possible to further evaluate the individual output signals of the touch sensitive sensors 20A, 20B, 20C, 20D within a group.

The acceleration sensors 22H, 22V are sensors which are capable of measuring an acceleration acting on the handheld device 10. This is accomplished by measuring an inertial force occurring when the handheld device 10 is accelerated. For example, the acceleration sensors 22H, 22V could be based on microelectromechanical devices measuring the inertial force acting on a free standing structure, e.g., a cantilever. The measurement itself may be based on capacitive or resistive read out. In the illustrated example, one of the acceleration sensors 22H, 22V, e.g., the acceleration sensor 22H, is used for measuring acceleration in a direction extending along the short sides of the display 12, whereas the other one of the acceleration sensors 22H, 22V, e.g., the acceleration sensor 22V is used for measuring acceleration along the long sides of the display 12. In situations, in which the handheld device is not substantially accelerated, the acceleration sensors 22H, 22V will still be sensitive to gravity. Accordingly, the acceleration sensors 22H, 22V can be used to determine the orientation of the handheld device 10 with respect to the direction of gravity. Generally, if the handheld device 10 is otherwise resting, the acceleration sensors 22H, 22V will indicate an acceleration directed oppositely to the direction of gravity. For example, if the acceleration sensor 22H measures an acceleration pointing from the side of the touch sensitive sensors 20B to the side of the touch sensitive sensors 20A, this means that the direction of gravity is from the side of the touch sensitive sensors 20A to the side of the touch sensitive sensors 20B and the touch sensitive sensors 20B are located on the bottom side of the handheld device 10 and vice-versa. Similarly, if the acceleration sensor 22V measures an acceleration directed from the side of the touch sensitive sensors 20D to the side of the touch sensitive sensors 20C, this means that the direction of gravity is from the side of the touch sensitive sensors 22C to the side of the touch sensitive sensors 20D and the touch sensitive sensors 20D are on the bottom side of the handheld device 10 and vice-versa.

Using the respective output signals of the touch sensitive sensors 20A, 20B, 20C, 20D, the image orientation controller 15 can therefore conclude on which side of the display 12 the user is holding the handheld device 10. For example, if the touch sensitive sensors 20A indicate contact with the user's hand, the image orientation controller 15 may conclude that the user holds the handheld device 10 on the side of the touch sensitive sensors 20A. If the output signals of the touch sensitive sensors 20B indicate contact with the user's hand, the image orientation controller 15 may conclude that the handheld device 10 on the side of the touch sensitive sensors 20B. If the output signals of the touch sensitive sensors 20C indicate contact with the user's hand, the image orientation controller 15 may conclude that the user holds the handheld device 10 on the side of the touch sensitive sensors 20C. If the output signals of the touch sensitive sensors 20D indicate contact with the user's hand, the image orientation controller 15 may conclude that the user holds the handheld device 10 on the side of the touch sensitive sensors 20D.

According to some embodiments of the invention, the image orientation controller 15 will process the output signals of the touch sensitive sensors 20A, 20B, 20C, 20D in such a way that the image to be shown on the display 12 is arranged with its lateral sides on those sides of the display 12 for which the output signals of the touch sensitive sensors 20A, 20B, 20C, 20D indicate contact with the user's hand. For example, if the output signals of the touch sensitive sensors 20A and/or the output signals of the touch sensitive sensors 20B indicate contact with the user's hand, the image orientation controller 15 may select the image orientation in such a way that the lateral sides of the image are arranged on the side of the touch sensitive sensors 20A and the side of the touch sensitive sensors 20B. Alternatively, if the output signals of the touch sensitive sensors 20C and/or the output signals of the touch sensitive sensors 20D indicate contact with the user's hand, the image orientation controller 15 may select the orientation of the image in such a way that the lateral sides of the image are arranged on the side of the touch sensitive sensors 20C and the side of the touch sensitive sensors 20D.

According to some embodiments, the output signals of the acceleration sensors 22H, 22V may be additionally used to determine on which side of the display 12 the bottom and top side of the image should be arranged. In this way, the image orientation can be appropriately selected even if the handheld device 10 is rotated by 180°. In other words, the image orientation can be selected in such a way that the bottom side of the image is arranged on that side of the display 12 for which the acceleration sensors 22H, 22V indicate that it is the bottom side of the handheld device 10.

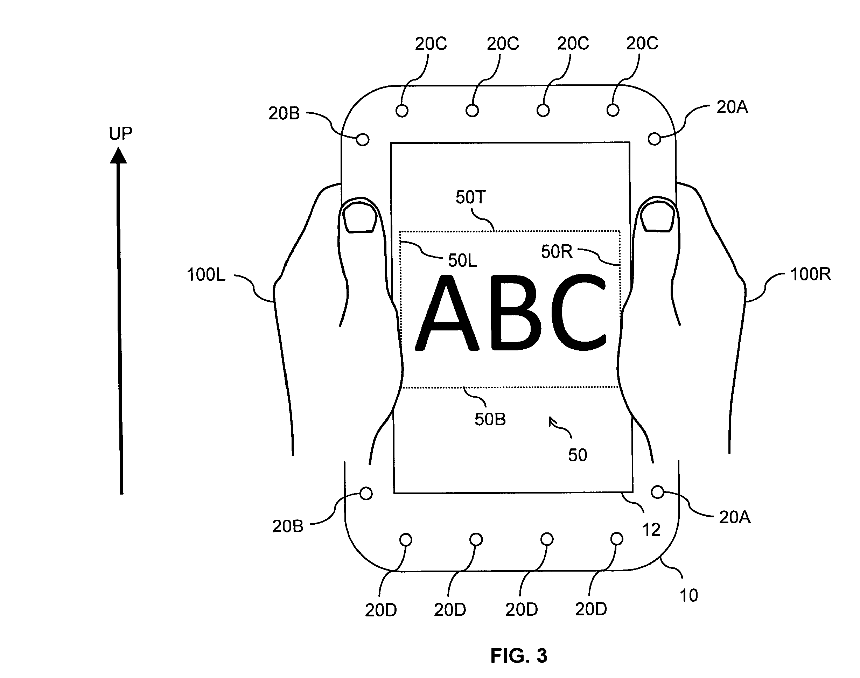

In the following, the concepts of selecting the image orientation which may be applied by the image orientation controller 15 will be explained by referring to exemplary scenarios of holding the handheld device as illustrated in Figs. 3-6. In Figs. 3-6, a vertical arrow indicates the upward direction, i.e., the direction opposite to the direction of gravity. Figs. 3-6 further illustrate the image 50 shown by the display 12. In particular, the image 50 is illustrated with a top side 50T, a bottom side 50B and lateral sides 50LR, i.e., a right side 50R and a left side 50L.

In Fig. 3 a scenario is illustrated in which the handheld device is held with the touch sensitive sensors 20D on the bottom side and the touch sensitive sensors 20C on the top side. Accordingly, the user will hold the handheld device with the right hand 100R on the side of the touch sensitive sensors 20A and with the left hand 100L on the side of the touch sensitive sensors 20B. In some situations, the user may also release either one of the right hand 100R or the left hand 100L. Accordingly, in the scenario of Fig. 3 the output signals of the touch sensitive sensors 20A and/or the output signals of the touch sensitive sensors 20B indicate contact with the user's hand. The orientation of the image 50 as shown by the display 12 is therefore selected in such a way that the lateral sides 50R, 50L of the image are arranged on the side of the touch sensitive sensor 20A and the side of the touch sensitive sensor 20B, i.e., on the long sides of the display. This corresponds to a portrait orientation of the image 50.

Further, in the scenario of Fig. 3 the output signals of the acceleration sensors 22H, 22V indicate an acceleration in the upward direction, which means that the side of the touch sensitive sensors 20C is the top side of the handheld device 10 and the side of the touch sensitive sensors 20D is the bottom side of the handheld device 10. Accordingly, the orientation of the image 50 is selected in such a way that the top side 50T of the image 50 is arranged on the top side of the handheld device 10.

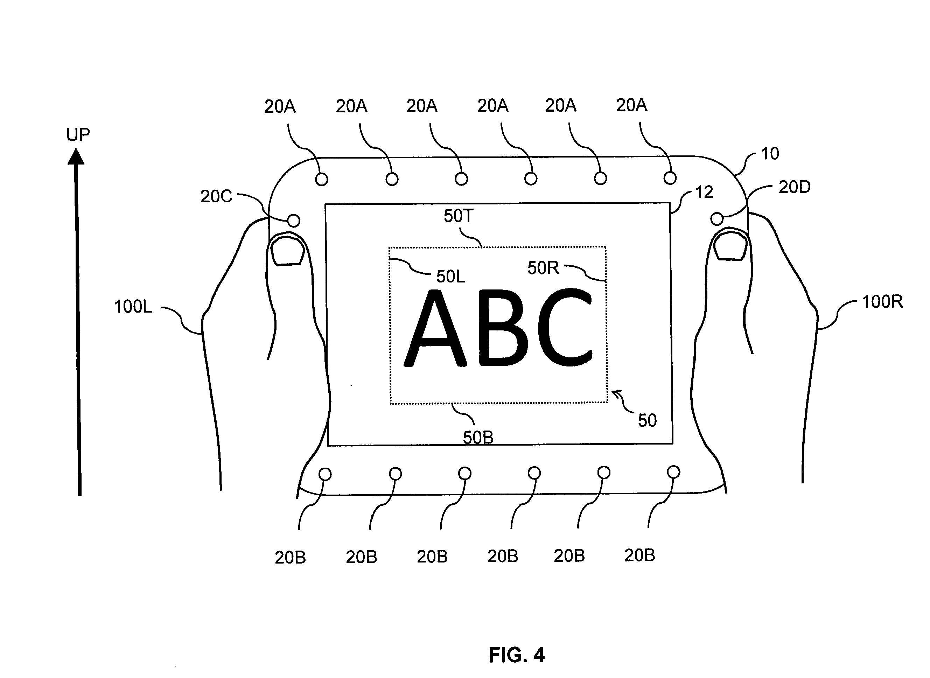

In the scenario of Fig. 4, the user holds the handheld device 10 with the right hand 100R on the side of the touch sensitive sensors 20D and with the left hand on the side of the touch sensitive sensors 20D. The side of the touch sensitive sensors 20A is the top side of the handheld device, and side of the touch sensitive sensors 20B is the bottom side of the handheld device 10. Again, the user may also release either one of the right hand 100R and the left hand 100L.

In the scenario of Fig. 4, the output signals of the touch sensitive sensors 20D and/or the output signals of the touch sensitive sensors 20C will indicate contact with the user's hand. Accordingly, the orientation of the image 50 is selected in such a way that the lateral sides 50R, 50L of the image 50 are arranged on the side of the touch sensitive sensors 20C and the side of the touch sensitive sensors 20D. This corresponds to a landscape orientation of the image 50.

Furthermore, in the scenario of Fig. 4 the acceleration sensors 22H, 22V indicate an acceleration in the direction from the side of the touch sensitive sensors 20B to the side of the touch sensitive sensors 20A, which means that the touch sensitive sensors 20B are arranged on the bottom side of the hand held device 10 and the touch sensitive sensors 20A are arranged on the top side of the hand held device 10. Accordingly, the orientation of the image 50 is selected in such a way that the top side 50T of the image 50 is arranged on the top side of the handheld device 10 and the bottom side 50B of the image 50 is arranged on the bottom side of the handheld device 10.

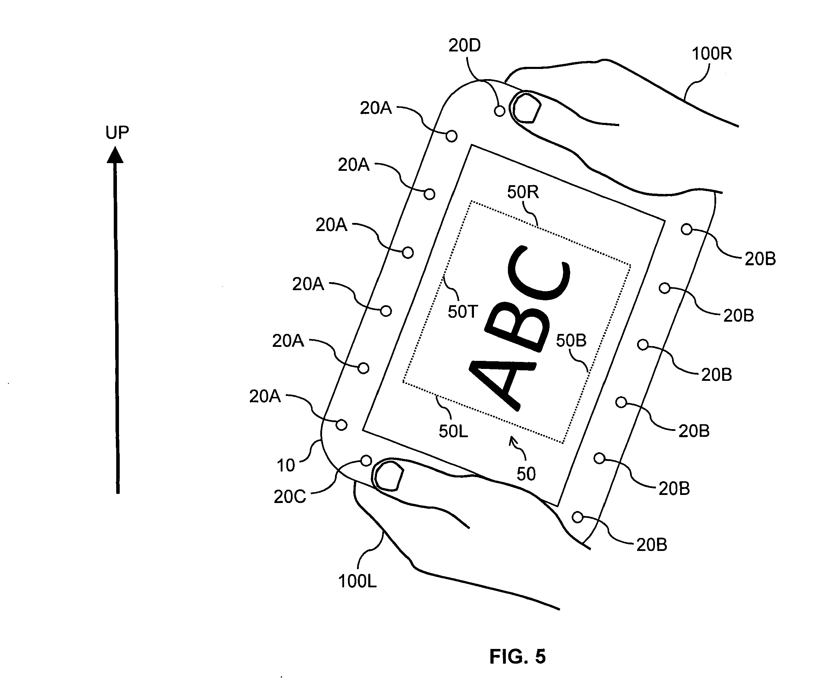

In the scenario of Fig. 5, the handheld device 10 is held in a similar manner as in the scenario of Fig. 4. That is to say, the user holds the handheld device 10 with the right hand 100R on the side of the touch sensitive sensors 20D and the left hand 100L on the side of the touch sensitive sensors 20C. However, as compared to the orientation of the handheld device 10 in the scenario of Fig. 4, the handheld device 10 is tilted toward the orientation of the handheld device in the scenario of Fig. 3. For example, this may occur when the user is using the handheld device 10 while lying in bed. Nonetheless, since the selection of the orientation of the image 50 is in the first place selected on the basis of the output signals of the touch sensitive sensors 20A, 20B, 20C, 20D, the selected orientation of the image 50 is the same as in the scenario of Fig. 4, i.e., the lateral sides 50R, 50L of the image 50 are arranged on the side of the touch sensitive sensors 20C and the side of the touch sensitive sensors 20D.

The output signals of the acceleration sensors 22H, 22V may be neglected or still be used as a basis for selecting where to arrange the top side 50T and the bottom side 50B of the image 50. That is to say, among the acceleration sensors 22H, 22V, the acceleration sensor 22V still indicates a direction of the acceleration which is from the side of the touch sensitive sensors 20B to the side of the touch sensitive sensors 20A, which means that the touch sensitive sensors 20B will be located rather on the bottom side of the handheld device 10 than on the top side of the handheld device 10. Accordingly, the top side 50T of the image 50 is arranged on the side of the touch sensitive sensors 20A, and the bottom side 50B is arranged on the side of the touch sensitive sensors 20B.

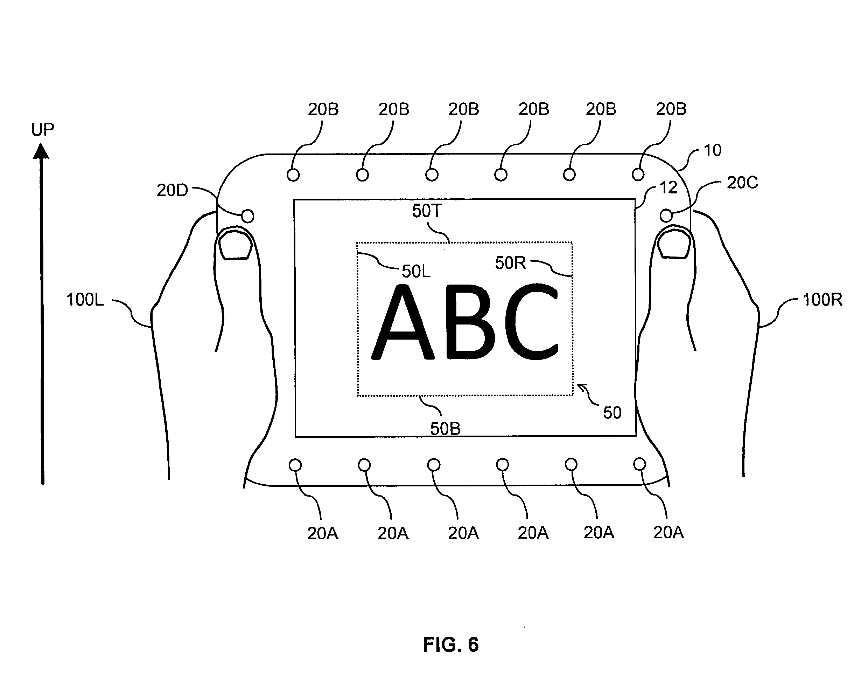

The scenario of Fig. 6 is generally similar to the scenario of Fig. 4, however with the handheld device 10 turned around by 180°. That is to say, in the scenario of Fig. 6, the user holds the handheld device 10 with the right hand 100R on the side of the touch sensitive sensors 20C and with the left hand on the side of the touch sensitive sensors 20D. Again, the user may also release the right hand 100R or the left hand 100L. Accordingly, the output signals of the touch sensitive sensor 20C and/or the output signals of the touch sensitive sensors 20D will indicate contact with the user's hand, and the orientation of the image 50 is selected in such a way that the lateral sides 50R, 50L of the image 50 are arranged on the side of the touch sensitive sensors 20C and the side of the touch sensitive sensors 20D. This again corresponds to a landscape orientation of the image 50.

However, as compared to the scenario of Fig. 4, in the scenario of Fig. 6 the touch sensitive sensors 20A are arranged on the bottom side of the handheld device and the touch sensitive sensors 20B are arranged on the top side of the handheld device 10. Accordingly, the acceleration sensor 22H will indicate that the direction of acceleration is from the side of the touch sensitive sensor 20A to the side of the touch sensitive sensors 20B, and the top side 50T of the image 50 is arranged on the side of the touch sensitive sensors 20B.

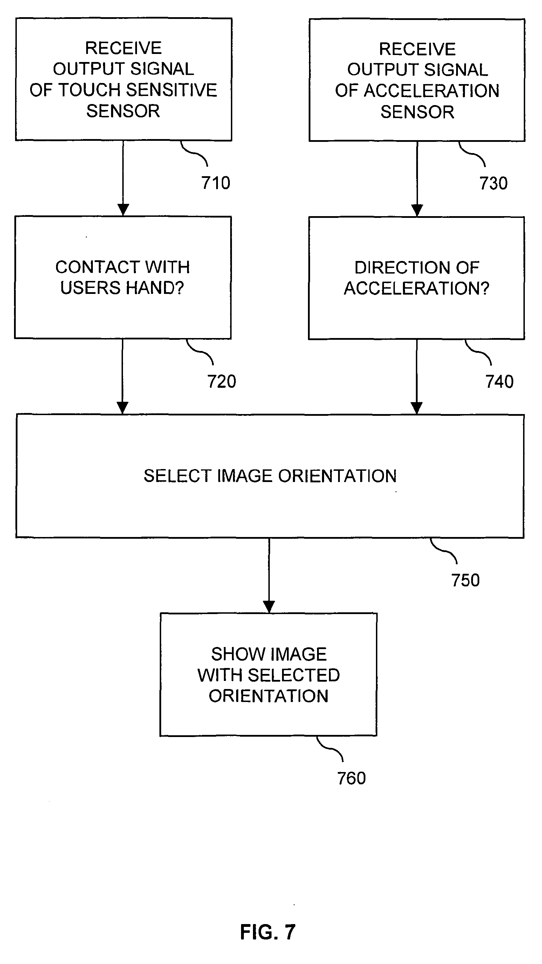

Fig. 7 shows a flowchart for schematically illustrating a method according to an embodiment of the invention. The method may be performed by the image orientation controller 15 as illustrated in Fig. 2.

At step 710, an output signal of at least one touch sensitive sensor is received. For example, respective output signals of the touch sensitive sensors 20A, 20B, 20C, 20D as illustrated in Figs. 1-6 may be received.

At step 720, it is determined whether the received output signal indicates contact with the user's hand.

At step 750, the orientation of the image is selected depending on the output signal of the touch sensitive sensor. In particular, if the output signal indicates contact with the user's hand, the orientation of the image is selected in such a way that one of the lateral sides of the image is arranged on the side of the touch sensitive sensor for which the output signal indicates contact with the user's hand. If the touch sensitive sensor for which the output signal indicates contact with the user's hand is located on a short side of the display, then a landscape orientation may be selected. If the touch sensitive sensor for which the output signal indicates contact with the user's hand is on a long side of the display, the selected orientation may be a portrait orientation.

At step 760, the image is shown with the selected orientation.

Optionally, the method may further be supplemented by steps 730 and 740. At step 730, an output signal of an acceleration sensor is received, e.g. an output signal of the acceleration sensor 22V or an output signal of the acceleration sensor 22H.

At step 740, a direction of the acceleration is determined. In step 750, this direction of acceleration may be used as an auxiliary criterion for selecting the orientation of the image. In particular, the orientation may be selected in such a way that the top side of the image is arranged in the direction of the determined acceleration. That is to say, if the detected direction of the acceleration is from a first side of the display to a second side of the display, the top side of the image will be arranged on the second side of the display, and the bottom side of the image will be arranged on the first side of the display.

It is to be understood that the embodiments and examples as described above have been provided for the purpose of illustrating the general concepts of the present invention and are susceptible to various modifications. For example, the concepts may be applied in other types of handheld devices. Also, the evaluation of output signals of the touch sensitive sensors could be combined with output signals of other types of sensors, in addition or as an alternative to using acceleration sensors. Also, it is to be understood that some embodiments the use of acceleration sensors may be omitted. Moreover, the touch sensitive sensors could also be evaluated so as to detect other than the illustrated ways of holding the handheld device. In some cases, output signal of the touch sensitive sensors could also be evaluated as not being suitable to be used as a basis for reliably selecting the orientation of the image. In such situations, the image orientation controller could switch to other processes of selecting the orientation of the image, e.g. on the basis of acceleration sensors only.

## Claims

1. A method of displaying an image (50) in a handheld device (10), comprising:
receiving an output signal of a touch sensitive sensor (20A, 20B, 20C, 20D) located on one side of a display (12) of the handheld device (10);
selecting an orientation of the image (50) depending on the received output signal of the at least one touch sensitive sensor (20A, 20B, 20C, 20D); and
showing the image (50) with the selected orientation on the display (12) of the handheld device (10).

2. The method according to claim 1,
wherein the image (50) has a top side (50T), a bottom side (50B), and lateral sides (50R, 50L); and
wherein the orientation is selected to show the image (50) with one of its lateral sides (50R, 50L) on the side of the at least one touch sensitive sensor (20A, 20B, 20C, 20D) if the output signal of the at least one touch sensitive sensor (20A, 20B, 20C, 20D) indicates contact with a users hand (100L, 100R).

3. The method according to claim 1 or 2, comprising:
receiving an output signal of at least one further touch sensitive sensor (20A, 20B, 20C, 20D) located at at least one further side of the display (12); and
selecting the orientation of the image (50) depending on the received output signal of the at least one further touch sensitive sensor (20A, 20B, 20C, 20D).

4. The method according to claim 3,
wherein the image (50) has a top side (50T), a bottom side (50B), and lateral sides (50R, 50L); and
wherein the orientation is selected to show the image (50) with one of its lateral sides (50R, 50L) on that further side of the display (50) on which the at least one further touch sensitive sensor (20A, 20B, 20C, 20D) indicates contact with a users hand (100R, 100L).

5. The method according to claim 3 or 4,
wherein the at least one touch sensitive sensor (20A, 20B, 20C, 20D) and the at least one further touch sensitive sensor (20A, 20B, 20C, 20D) are located on opposite sides of the display (12).

6. The method according to any one of claims 3 to 5,
wherein the at least one touch sensitive sensor (20A, 20B, 20C, 20D) and the at least one further touch sensitive sensor are located on perpendicular sides of the display (12).

7. The method according to any one of claims 3 to 6,
wherein the at least one touch sensitive sensor (20A, 20B, 20C, 20D) and the at least one further touch sensitive sensor (20A, 20B, 20C, 20D) are located on all sides of the display (12).

8. The method according to any one of the preceding claims, comprising:
receiving an output signal of at least one acceleration sensor (20H, 20V) of the handheld device,
wherein the orientation is selected depending on the received output signal of the at least one acceleration sensor (20H, 20V).

9. The method according to claim 8,
wherein the image has a top side (50T) and a bottom side (50B); and
wherein the orientation is selected to show the image (50) with its top side in a direction of acceleration indicated by the acceleration sensor (20H, 20V).

10. A handheld device (10), comprising:
a display (12);
at least one touch sensitive sensor (20A, 20B, 20C, 20D) located at one side of the display (12); and
an image orientation controller (15) configured to control an orientation of an image (50) shown by the display (12) depending on an output signal of the at least one touch sensitive sensor (20A, 20B, 20C, 20D).

11. The handheld device (10) according to claim 10,
wherein the at least one touch sensitive sensor (20A, 20B, 20C, 20D) comprises a capacitive sensor.

12. The handheld device (10) according to claim 10 or 11, comprising:
at least one further touch sensitive sensor (20A, 20B, 20C, 20D) located at at least one further side of the display (12),
wherein the image orientation controller (15) is configured to control the orientation of the image (50) depending on an output signal of the at least one further touch sensitive sensor (20A, 20B, 20C, 20D).

13. The handheld device (10) according to any one of claims 10 to 12, further comprising:
at least one acceleration sensor (22H, 22V),
wherein the image orientation controller (15) is configured to control the orientation of the image (50) depending on an output signal of the at least one acceleration sensor (22H, 22V).

14. The handheld device (10) according to any one of claims 10 to 13, comprising:
a housing (11) having a front surface in which the display (12) is mounted;
wherein the at least one touch sensitive sensor (20A, 20B, 20C, 20D) is located on the front surface of the housing (11).

15. The handheld device (10) according to any one of claims 10 to 14, wherein the handheld device (10) is configured to operate according to a method as defined in any one of claims 1 to 9.
